# EUROPEAN PATENT APPLICATION

(11) **EP 2 434 455 A2**
(43) Date of publication of application: **28.03.2012**
(21) Application number: 11181867.0
(22) Date of filing: 19.09.2011
(51) Int. Cl.: G06T 11/60

(54) **Terminal for use in associating an annotation with an image**

(30) Priority: 24.09.2010 US 889764
(71) Applicant: Hand Held Products, Inc., Skaneateles Falls, New York 13153 (US)
(72) Inventor: Koziol, Thomas, Morristown, NJ New Jersey 07962-2245 (US); Epting, Alec, Morristown, NJ New Jersey 07962-2245 (US)
(74) Representative: Buckley, Guy Julian

(57) **Abstract**

There is also provided a terminal for use in associating an annotation with an image. The terminal can comprise a processor, one or more computer readable storage mediums, an imaging assembly, first program instructions to obtain an annotation from a source in response to the terminal capturing an image, second program instructions to create an image header defined by a standard, and third program instructions to store the image header, the image, and the annotation in a data structure on the computer readable storage medium. The first, second, and third program instructions can be stored on the one or more computer readable storage mediums for execution by the processor. There is also provided a computer program product and a computer system for rendering a data structure comprising an annotation and an image on a display.

## Description

### CROSS REFERENCE TO RELATED APPLICATIONS

This application claims priority to U. S. Patent Application No. 12/889,764 filed September 24, 2010 entitled, "Terminal For Use In Associating An Annotation With An Image." The priority of the above application is claimed and is incorporated herein by reference in its entirety.

### FIELD OF THE INVENTION

The invention generally relates to terminals, and more particularly to terminals having imaging assemblies.

### BACKGROUND OF THE INVENTION

The use of integrated imaging assemblies in electronic devices such as terminals has greatly expanded the capabilities of such electronic devices to capture images in conjunction with obtaining other forms of collected data, also referred to as annotations. For example, a terminal having an imaging assembly and a Global Positioning System (GPS) receiver can capture an image in conjunction with obtaining GPS coordinates of the location where the image was taken. In a second example, a terminal having an imaging assembly and a bar code reading device can capture an image in conjunction with obtaining data from a bar code shown in the image. In a third example, a terminal having an imaging assembly and a battery can capture an image in conjunction with obtaining the date and time of the image from the battery.

### SUMMARY OF THE INVENTION

In one embodiment, a terminal for use in associating an annotation with an image is provided. The terminal comprises a processor, first program instructions to obtain an annotation from a source in response to the terminal capturing an image, second program instructions to create an image header defined by a standard, and third program instructions to store the image header, the image, and the annotations in a data structure. The first, second, and third program instructions are for execution by the processor.

### BRIEF DESCRIPTION OF THE DRAWINGS

So that the manner in which the above recited features of the present invention can be understood in detail, a more particular description of the invention briefly summarized above, may be had by reference to the embodiments, some of which are illustrated in the accompanying drawings. It is to be noted, however, that the appended drawings illustrate only typical embodiments of this invention and are therefore not to be considered limiting of its scope, for the invention may admit to other equally effective embodiments. Moreover, the drawings are not necessarily to scale, emphasis generally being placed upon illustrating the principles of certain embodiments of invention.

Thus, for further understanding of the concepts of the invention, reference can be made to the following detailed description, read in connection with the drawings in which:

FIG. 1 illustrates an image rendered together with annotations according to an exemplary embodiment of the invention.

FIG. 2 is a block diagram of a terminal for use in associating annotations with an image according to one exemplary embodiment of the invention.

FIG. 3 is an exploded perspective view of an imaging module carrying a subset of circuits as shown in FIG. 2.

FIG. 4 is an assembled view of the imaging module of FIG. 2.

FIG. 5 is a perspective view of a terminal incorporating an imaging module as shown in FIGS. 2 and 3.

FIG. 6 is a block diagram of a data structure according to one exemplary embodiment of the invention.

FIG. 7 is a block diagram of an annotation header of a data structure according to an exemplary embodiment of the invention.

FIG. 8 illustrates an image rendered together with annotations according to an exemplary embodiment of the invention.

FIG. 9 is a flowchart of a method for associating an annotation with an image 2500 according to an exemplary embodiment of the invention.

FIGS. 10a-10b are flow diagrams illustrating encryption of an image and a key, respectively, according to an exemplary embodiment of the invention.

FIGS. 10c-10d are flow diagrams illustrating decryption of a key and an image, respectively, according to an exemplary embodiment of the invention.

FIG. 11 is a block diagram of a computer system for rendering the contents of a data structure according to an exemplary embodiment of the invention.

FIG. 12 is a flowchart of a method for rendering a data structure comprising an annotation and an image on a display according to an exemplary embodiment of the invention.

### DETAILED DESCRIPTION OF THE INVENTION

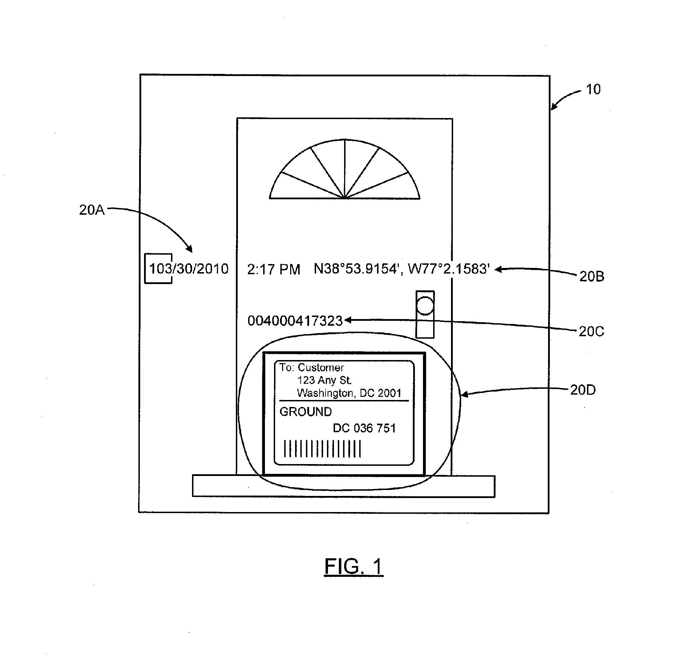

An image and one or more annotations that provide information about the image may be captured by a terminal and rendered together on a display to facilitate the process of making certain inferences. For example, FIG. 1 shows an image 10 taken by a courier with a terminal rendered together with annotations 20A, 20B, 20C, and 20D obtained by the terminal. Image 10 is of a package that the courier left on the doorstep of the home of an absent addressee. Annotation 20A is the time and date that image 10 was taken, annotation 20B is Global Positioning System (GPS) coordinates of the location where image 10 was taken, annotation 20C is decoded-out message data decoded from the bar code appearing on the package in image 10, and annotation 20D is the courier's own marking of a circle around the package. Image 10 and annotations 20A, 20B, 20C, and 20D may be used in collaboration to infer, e.g., that the courier delivered the package after the delivery deadline or to an incorrect address.

In the course of developing the apparatuses and methods provided for herein, it was determined that the ability to make such inferences is hampered when the image and the annotations are not rendered together on a display. For example, if the images and the annotations are stored in separate files, each file may need to be viewed separately, and further, each file may need to be transferred to each device on which the image and annotations are to be viewed. As a consequence, some of the files may be lost or forgotten in the transferring process. Further, a mapping may be required to provide a correlation between the annotations and the image to facilitate the inference making process.

Additionally in the course of developing the apparatuses and methods provided for herein, it was determined that the ability to make such inferences is hampered when the image and the annotations are rendered together on a display, but portions of the annotations obscure key portions of the image. For example, in FIG. 1, annotation 20A obscures a portion of image 10 showing the address of the home, which address would have appeared in-full in a rendering of image 10 without annotation 20A. The ability to view image 10 with the complete address may facilitate making an inference as to whether the package was delivered to the correct address.

Embodiments of the invention address the problems set forth hereinabove. In one exemplary embodiment of the invention, a computer program product is provided for rendering a data structure comprising an annotation and an image on a display. The computer program product can comprise a computer readable storage medium, first program instructions to locate the annotation within the data structure, second program instructions to locate the image within the data structure, and third program instructions to render the annotation at a rendering location relative to the image on the display. There is also provided for herein, in another exemplary embodiment of the invention, a terminal for use in associating an annotation with an image. The terminal can comprise a processor, one or more computer readable storage mediums, an imaging assembly, first program instructions to obtain an annotation from a source in response to the terminal capturing an image, second program instructions to create an image header defined by a standard, and third program instructions to store the image header, the image, and the annotation in a data structure on the computer readable storage medium. The first, second, and third program instructions can be stored on the one or more computer readable storage mediums for execution by the processor.

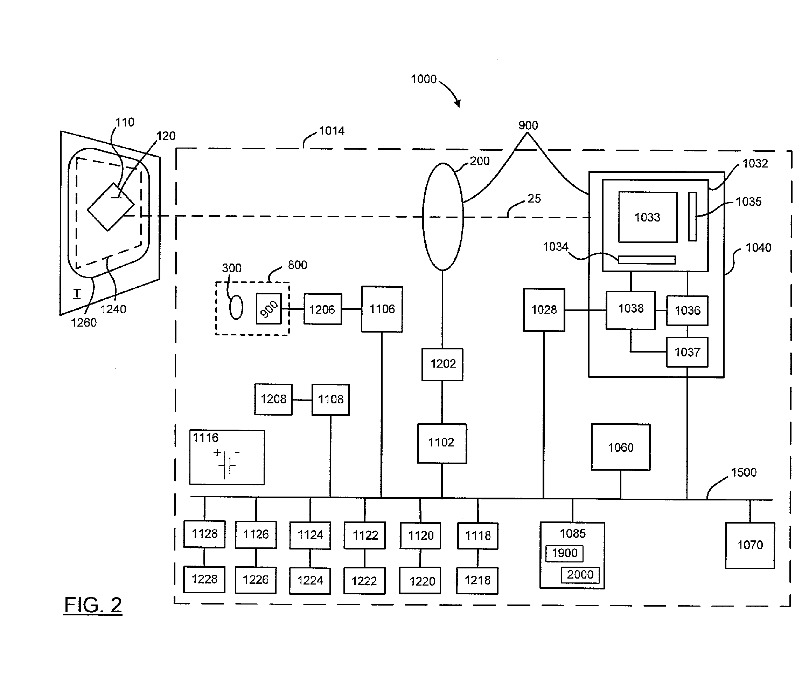

FIG. 2 is a block diagram of a terminal 1000 for use in associating annotations 20A, 20B, 20C, and 20D with image 10 according to one exemplary embodiment of the invention. Terminal 1000 can include an image sensor 1032 comprising a multiple pixel image sensor array 1033 having pixels arranged in rows and columns of pixels, associated column circuitry 1034 and row circuitry 1035. Associated with the image sensor 1032 can be amplifier circuitry 1036 (amplifier), and an analog to digital converter 1037 which converts image information in the form of analog signals read out of image sensor array 1033 into image information in the form of digital signals. Image sensor 1032 can also have an associated timing and control circuit 1038 for use in controlling e.g., the exposure period of image sensor 1032, gain applied to the amplifier 1036. The noted circuit components 1032, 1036, 1037, and 1038 can be packaged into a common image sensor integrated circuit 1040, which image sensor integrated circuit 1040 and a lens assembly 200 can be included in imaging assembly 900.

Image sensor integrated circuit 1040 can incorporate fewer than the noted number of components. In one example, image sensor integrated circuit 1040 can be provided e.g., by an MT9V022 (752x480 pixel array) or an MT9V023 (752x480 pixel array) image sensor integrated circuit available from Micron Technology, Inc. In one example, image sensor integrated circuit 1040 can incorporate a Bayer pattern filter, so that defined at the image sensor array are red pixels at red pixel positions, green pixels at green pixel positions, and blue pixels at blue pixel positions. Frames of image data captured by terminal 1000 that are provided utilizing such an image sensor array incorporating a Bayer pattern can include red pixel values at red pixel positions, green pixel values at green pixel positions, and blue pixel values at blue pixel positions. In an embodiment incorporating a Bayer pattern image sensor array, CPU 1060, prior to subjecting a frame to further processing, can interpolate pixel values at frame pixel positions intermediate of green pixel positions utilizing green pixel values for development of a monochrome frame of image data. Alternatively, CPU 1060, prior to subjecting a frame for further processing, can interpolate pixel values intermediate of red pixel positions utilizing red pixel values for development of a monochrome frame of image data. CPU 1060 can alternatively, prior to subjecting a frame for further processing, interpolate pixel values intermediate of blue pixel positions utilizing blue pixel values.

In the course of operation of terminal 1000, image signals can be read out of image sensor 1032, converted, and stored into at least one computer readable medium 1085. Computer readable medium 1085 can be a computer readable signal medium or a computer readable storage medium. A computer readable storage medium can be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Terminal 1000 can include a processor provided by CPU 1060, which processor can be adapted to read out image data stored in computer readable medium 1085 and subject such image data to various image processing algorithms. In one exemplary embodiment of the invention, terminal 1000 can include a direct memory access unit (DMA) 1070 for routing image information read out from image sensor 1032 that has been subject to conversion in computer readable medium 1085. In another exemplary embodiment of the invention, terminal 1000 can employ a system bus providing for bus arbitration mechanism (e.g., a PCI bus) thus eliminating the need for a central DMA controller. A skilled artisan would appreciate that other embodiments of the system bus architecture and/or direct memory access components providing for efficient data transfer between the image sensor 1032 and computer readable medium 1085 are within the scope and the spirit of the invention.

Annotation program function 1900 and configuration program function 2000 can be embodied on computer readable medium 1085. Annotation program function 1900 can be computer program code for associating one or more annotations, e.g., annotations 20A, 20B, 20C, and 20D, with an image, e.g., image 10. Configuration program function 2000 can be computer program code for configuring image and annotation preferences, e.g., algorithms to use for compressing images and/or annotations, algorithms to use for encrypting images and/or annotations, locations at which to render annotations relative to an image, and sources from which to obtain annotations such as from decodable indicia 120, from computer readable medium 1085, from battery 1116, from GPS device 1118, or from display 1222. Annotation program function 1900 and configuration program function 2000 can be transmitted using any appropriate medium, including but not limited to wireless, wireline, optical fiber cable, RF, etc., or any suitable combination of the foregoing. Annotation program function 1900 and configuration program function 2000 can be written in any combination of one or more programming languages, including an object oriented programming language such as Java, Smalltalk, C++ or the like, conventional procedural programming languages, such as the "C" programming language, low-level programming languages, such as assembly language, or other high- or low-level programming languages.

Referring to further aspects of terminal 1000, lens assembly 200 can be adapted for focusing an image of a document 110 located within a field of view 1240 on a substrate, T, onto image sensor array 1033. A size in target space of a field of view 1240 of terminal 1000 can be varied in a number of alternative ways. A size in target space of a field of view 1240 can be varied e.g., by changing a terminal to target distances, changing an imaging lens setting, changing a number of pixels of image sensor array 1033 that are subject to read out. Imaging light rays can be transmitted about imaging axis 25. Lens assembly 200 can be adapted to be capable of multiple focal lengths and multiple planes of optical focus (best focus distances).

Terminal 1000 can include an illumination subsystem 800 for illumination of target, T, and projection of an illumination pattern 1260. Terminal 1000 can also be devoid of illumination sub-system 800. Illumination pattern 1260, in the embodiment shown, can be projected to be proximate to but larger than an area defined by field of view 1240, but can also be projected in an area smaller than an area defined by a field of view 1240.

In one exemplary embodiment of the invention, illumination subsystem 800 can also include an illumination lens assembly 300. In addition to or in place of illumination lens assembly 300, illumination subsystem 800 can include alternative light shaping optics, e.g., one or more diffusers, mirrors and prisms. In use, terminal 1000 can be oriented by an operator with respect to a target, T, (e.g., a document, a package, another type of substrate) bearing decodable indicia 120 in such manner that illumination pattern 1260 is projected onto decodable indicia 120. Decodable indicia 120 can be provided by, e.g., a 1D or 2D bar code symbol or optical character recognition (OCR) characters. Referring to further aspects of terminal 1000, lens assembly 200 can be controlled with use of electrical power input unit 1202 which provides energy for changing a plane of optimum focus of lens assembly 200. In one exemplary embodiment of the invention, electrical power input unit 1202 can operate as a controlled voltage source, and in another embodiment, as a controlled current source. Illumination subsystem light source assembly 900 can be controlled with use of light source control circuit 1204. Electrical power input unit 1202 can apply signals for changing optical characteristics of lens assembly 200, e.g., for changing a focal length and/or a best focus distance of (a plane of optimum focus of) lens assembly 200. Light source control circuit 1204 can send signals to illumination subsystem light source assembly 900, e.g., for changing a level of illumination output by illumination subsystem light source assembly 900. Certain elements of terminal 1000, e.g., image sensor integrated circuit 1040 (and accordingly array 1033), lens assembly 200 and illumination subsystem 800 can be packaged into an imaging module 1100 which can be incorporated into hand held housing 1014.

Terminal 1000 can also include a number of peripheral devices including trigger 1220 which may be used to make active a trigger signal for activating frame readout and/or certain decoding processes. Terminal 1000 can be adapted so that activation of trigger 1220 activates a trigger signal and initiates a decode attempt. For attempting to decode a bar code symbol, e.g., a one dimensional bar code symbol, CPU 1060 can process image data of a frame corresponding to a line of pixel positions (e.g., a row, a column, or a diagonal set of pixel positions) to determine a spatial pattern of dark and light cells and can convert each light and dark cell pattern determined into a character or character string via table lookup. Where a decodable indicia representation is a 2D bar code symbology, a decode attempt can comprise the steps of locating a finder pattern using a feature detection algorithm, locating matrix lines intersecting the finder pattern according to a predetermined relationship with the finder pattern, determining a pattern of dark and light cells along the matrix lines, and converting each light pattern into a character or character string via table lookup.

Terminal 1000 can include various interface circuits for coupling various peripheral devices to system address/data bus (system bus) 1500 for communication with CPU 1060 also coupled to system bus 1500. Terminal 1000 can include interface circuit 1028 for coupling image sensor timing and control circuit 1038 to system bus 1500, interface circuit 1102 for coupling electrical power input unit 1202 to system bus 1500, interface circuit 1106 for coupling illumination light source control circuit 1204 to system bus 1500, and interface circuit 1120 for coupling trigger 1220 to system bus 1500. Terminal 1000 can also include display 1222 coupled to system bus 1500 and in communication with CPU 1060, via interface 1122, as well as pointer mechanism 1224 in communication with CPU 1060 via interface 1124 connected to system bus 1500. Terminal 1000 can also include keyboard 1226 coupled to system bus 1500. Keyboard 1226 can be in communication with CPU 1060 via interface 1126 connected to system bus 1500. GPS device 1118 can be in communication with CPU 1060 via interface 1218 connected to system bus 1500. Terminal 1000 can also include range detector unit 1208 coupled to system bus 1500 via interface 1108. Terminal 1000 can also include a battery 1116 for, e.g., for storing the current time and date.

Terminal 1000 can also include interface circuit 1128 for coupling encoded information reader unit 1228 to system bus 1500. Encoded information reader unit 1228 can include one or more of a bar code reader unit, an RFID reader unit, and a card reader unit. The bar code reader unit of encoded information reader unit 1228 may be provided, e.g., by an IT4XXX/5XXX Imaging Module with decode out circuit of the type available from Hand Held Products, Inc. of Skaneateles Falls, NY. The IT4XXX/5XXX Imaging Module with decode out circuit provides decoding of a plurality of different types of bar code symbols and other decodable symbols such as PDF 417, Micro PDF 417, MaxiCode, Data Matrix, QR Code, Aztec, Aztec Mesa, Code 49, UCC Composite, Snowflake, Data Gliffs, Code 39, Code 128, Codabar, UPC, EAN, Interleaved 205, RSS, Code 93, Codablock, BC412, Postnet, Planet Code, Japanese Post, KIX(Dutch Post), OCR A and OCR B. The RDIF reader unit of encoded information reader unit 1228 can be provided by a Skytek Sky Module M1 reading terminal. The card reader unit of encoded information reader unit 1228 may include an integrated circuit card (IC CARD) reading terminal device, otherwise known as a smart card reader. Because encoded information reader unit 1228 of terminal 1000 can decode encoded data other than bar code message data, terminal 1000 can, in addition to sending decoded bar code message data, send other decoded message data such as decoded RFID message data, decoded mag stripe message data, or decoded smart card message data, which can also be designated by decodable indicia 120.

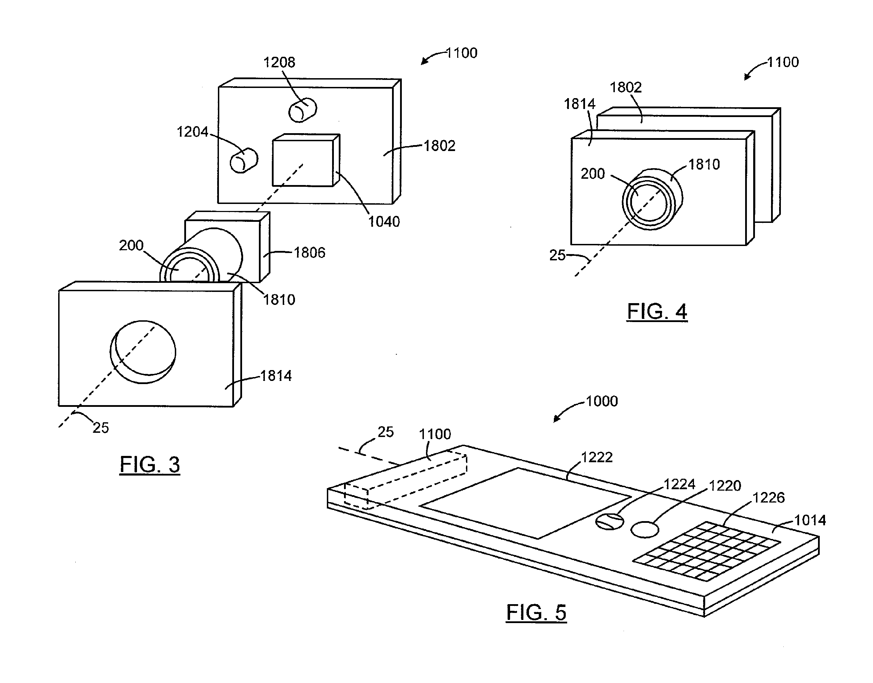

Referring to FIGS. 3 and 4, an imaging module 1100 for supporting components of terminal 1000 can include image sensor integrated circuit 1040 disposed on a printed circuit board 1802 together with illumination pattern light source bank 1208 and aiming pattern light source bank 1204 each shown as being provided by a single light source. Imaging module 1100 can also include containment 1806 for image sensor integrated circuit 1040, and housing 1810 for housing lens assembly 200. Imaging module 1100 can also include optical plate 1814 having optics for shaping light from bank 1204 and bank 1208 into predetermined patterns. Imaging module 1100 can be disposed in a hand held housing 1014, an example of which is shown in FIG. 5. Disposed on hand held housing 1014 can be display 1222, trigger 1220, pointer mechanism 1224, and keyboard 1226.

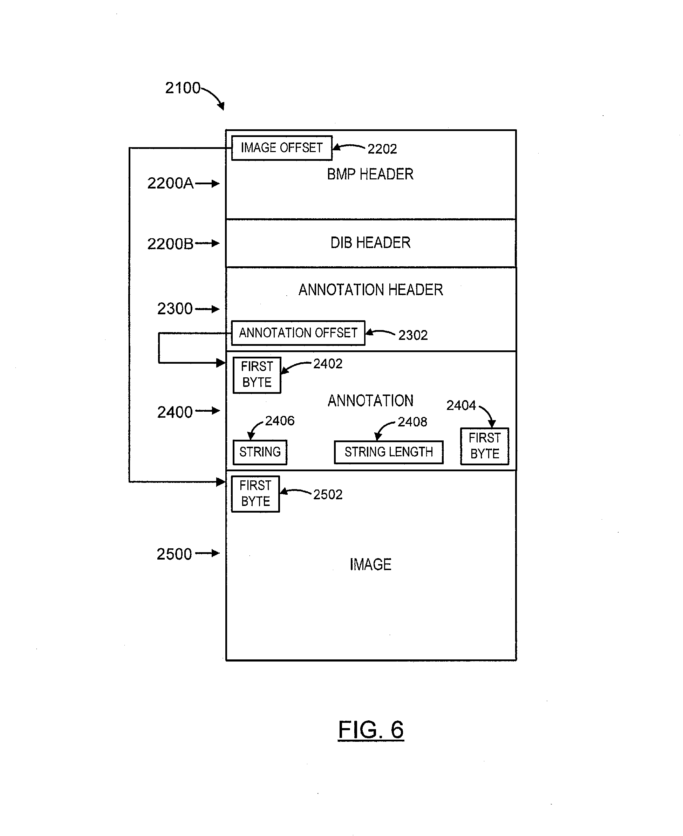

FIG. 6 is a block diagram of an data structure 2100 according to one exemplary embodiment of the invention. Annotation program function 1900 can generate data structure 2100 in response to terminal 1000 capturing image 2500. Annotation program function 1900 can store data structure 2100 on computer readable medium 1085. Data structure 2100 can comprise one or more image headers 2200A and 2200B, annotation header 2300, annotation 2400, and image 2500. Image headers 2200A and 2200B can be defined by a standard. For example, in one exemplary embodiment of the present invention, image header 2200A is a bitmap (BMP) header, and image header 2200B is a Microsoft Windows version 3 device-independent bitmap (DIB) header. Image header 2200A can comprise image offset 2202 locating a first byte 2502 of image 2500. Annotation header 2300 can comprise an annotation offset 2302 locating a first byte 2402 of annotation 2400. In one exemplary embodiment of the invention, first byte 2502 of image 2500 immediately follows last byte 2404 of annotation 2400 in data structure 2100.

Annotation 2400 can be stored in data structure 2100 in a standard image format defined by one or more of image headers 2200A and 2200B or in an encrypted format. In one exemplary embodiment of the invention, annotation 2400 is stored in data structure 2100 in a BMP format. In another exemplary embodiment of the invention, annotation 2400 is stored in data structure 2100 in a BMP format and is compressed using an eight-bit run length encoding ("RLE"). In another exemplary embodiment of the invention, annotation 2400 is stored in data structure 2100 in a BMP format and is compressed using a four-bit RLE. RLE is a simple form of data compression in which an original run of data (e.g., a sequence in which the same data value occurs in many consecutive data elements) is stored as a single data value and count rather than as the original run. In another exemplary embodiment of the invention, annotation 2400 is stored in data structure 2100 in a Data Encryption Standard (DES) encrypted format. In another exemplary embodiment of the invention, annotation 2400 is stored in data structure 2100 in an American Encryption Standard (AES) encrypted format.

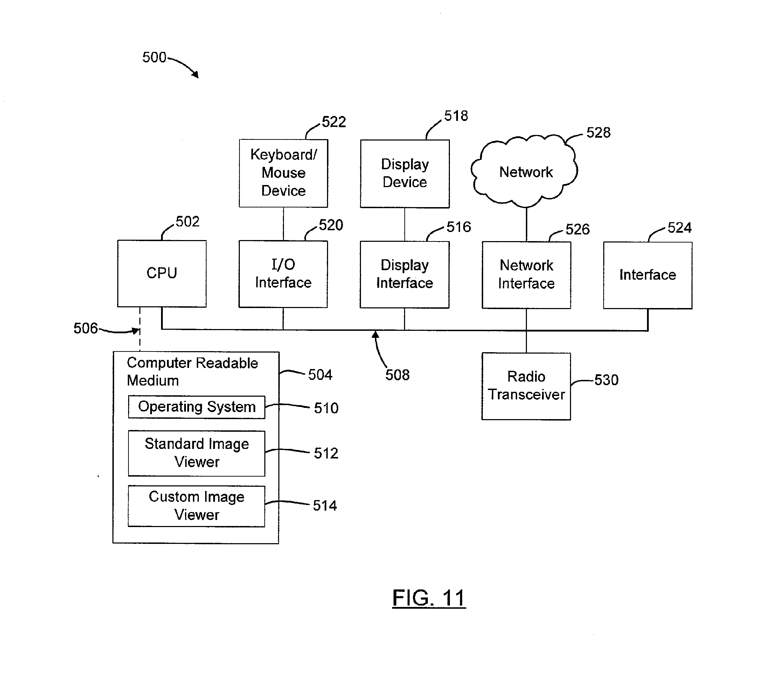

In one exemplary embodiment of the invention, annotation 2400 can comprise a string 2406 describing annotation 2400. For example, string 2406 can describe the contents of annotation 2400. String 2406 can be a Unicode string encoded using, e.g., UTF-8 encoding. A computer system, e.g., computer system 500 shown in FIG. 11, can be operative to extract string 2406 from annotation 2400 and store string 2406 in a database for searching purposes. Annotation 2400 can further comprise a string length 2408 of string 2406. In one exemplary embodiment of the invention, string length 2408 can be stored in contiguous bytes of annotation 2400 starting at first byte 2402 of annotation 2400, and string 2406 can be stored in contiguous bytes of annotation 2400 immediately following a last byte of string length 2408.

Image 2500 can be stored in data structure 2100 in a standard image format defined by one or more of image headers 2200A and 2200B or in an encrypted format. In one exemplary embodiment of the invention, image 2500 is stored in data structure 2100 in a BMP format. In another exemplary embodiment of the invention, image 2500 is stored in data structure 2100 in a BMP format and is compressed using an eight-bit RLE. In another exemplary embodiment of the invention, image 2500 is stored in data structure 2100 in a BMP format and is compressed using a four-bit RLE. In another exemplary embodiment of the invention, image 2500 is stored in data structure 2100 in a DES encrypted format. In another exemplary embodiment of the invention, image 2500 stored in data structure 2100 in an AES encrypted format. In another exemplary embodiment of the invention, the pixel format of annotation 2400 and image 2500 can be the same, e.g., RGB565. In another exemplary embodiment of the invention, annotation 2400 and image 2500 can be stored in mutually exclusive bytes of data structure 2100.

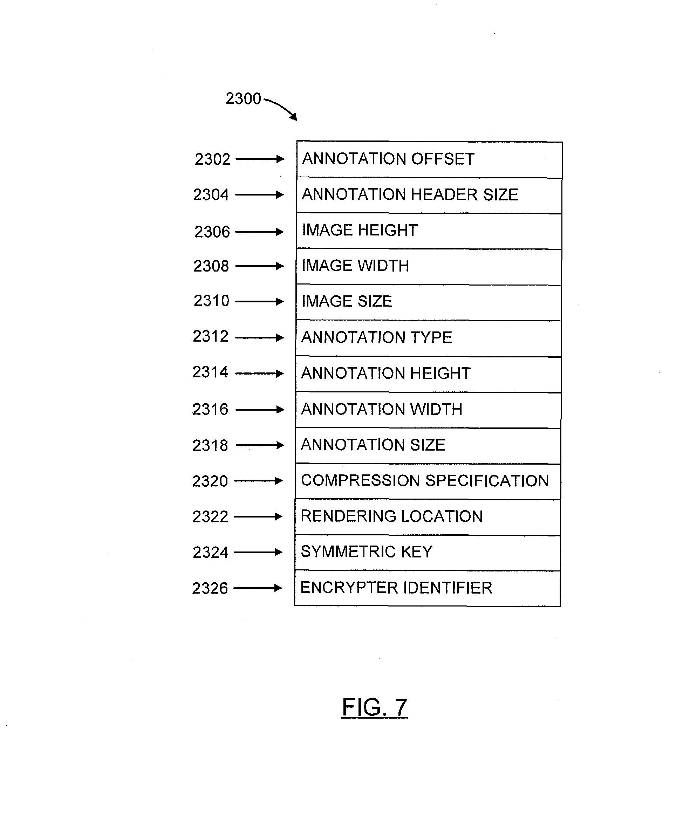

FIG. 7 is a block diagram of annotation header 2300 of data structure 2100 according to an exemplary embodiment of the invention. Annotation header 2300 can comprise annotation offset 2302, annotation header size 2304, image height 2306, image width 2308, image size 2310, annotation type 2312, annotation height 2314, annotation width 2316, annotation size 2318, compression specification 2320, rendering location 2322, key 2324, and encrypter identifier 2326. In embodiments wherein more than one annotation is to be associated with image 2500, annotation header can comprise an annotation offset 2302, an annotation type 2312, an annotation height 2314, an annotation width 2316, an annotation size 2318, a compression specification 2320, and a rendering location 2322 for each annotation to be associated with image 2500.

Annotation header size 2304 can be the size of annotation header 2300 and can be represented in bytes. Annotation type 2312 can be a type of annotation 2400, e.g., a date, time, GPS coordinates, user-marking coordinates, a decoded-out message generated from decodable indicia located in image 2500, RFID tag data, card data, the serial number of terminal 1000, or an audio recording. Annotation height 2314 can be a height of annotation 2400 and can be measured in pixels. Annotation width 2316 can be a width of annotation 2400 and can be measured in pixels. Annotation size 2318 can be the size of annotation 2400 and can be measured in kilobytes.

In embodiments wherein annotation 2400 and/or image 2500 are compressed in data structure 2100, compression specification 2320 can define how annotation 2400 and/or image 2500 are compressed. For example, a compression specification 2320 of "0" can mean that annotation 2400 and/or image 2500 are not compressed, a compression specification 2320 of "1" can mean that annotation 2400 and/or image 2500 are compressed using an eight-bit RLE, and a compression specification 2320 of "2" can mean that annotation 2400 and/or image 2500 are compressed using a four-bit RLE.

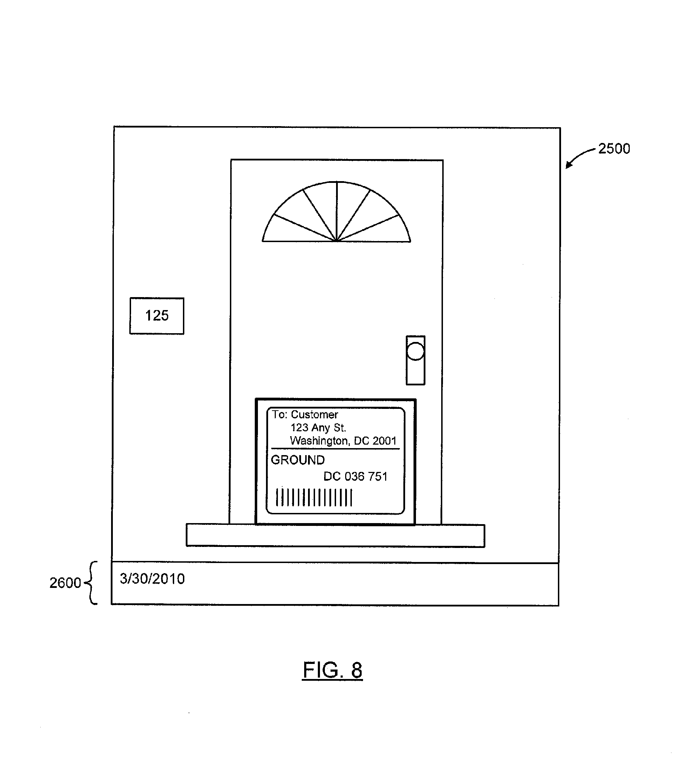

Rendering location 2322 can be provided by configuration program function 2000 and can be the location at which annotation 2400 is to be rendered on a display, e.g., display device 518 of computer system 500 shown in FIG. 11, relative to image 2500. Rendering location 2322 can be pixel coordinates of a corner, e.g., an upper-left corner, of a rectangle bounding annotation 2400. In one exemplary embodiment of the invention, rendering location 2322 can be within image 2500. In another exemplary embodiment of the invention, rendering location 2322 can be within annotation frame 2600 shown in FIG. 8 adjacent to, e.g., above, below, to the left of, or to the right of, image 2500. In another exemplary embodiment of the invention, annotation program function 1900 can comprise computer program instructions to set the color of each pixel in annotation frame 2600, other than those comprising annotation 2400, to a predominant color in the adjacent area of image 2500. For example, if the predominant color at the bottom of image 2500 is green, and annotation frame 2600 is located below image 2500, annotation program function 1900 can set the color of each pixel in annotation frame 2600, other than those comprising annotation 2400, to green.

In embodiments wherein rendering location 2322 is within image 2500, image height can be a number of pixels constituting the height of image 2500, image width 2308 can be a number of pixels constituting the width of image 2500, and image size 2310 can be a number of kilobytes constituting the size of image 2500. If, for example, image 2500 has a height of 600 pixels, a width of 800 pixels, and a size of 1000 kilobytes, at block 414, image height 2306 can be 600 pixels, image width 2308 can be 800 pixels, and image size 2310 can be 1000 kilobytes. In embodiments wherein rendering location 2322 is annotation frame 2600, image height 2306 can be a number exceeding the number of pixels constituting the height of image 2500, image width 2308 can be a number exceeding the number of pixels constituting the width of image 2500, and image size 2310 can be a number exceeding the number of kilobytes constituting the size of image 2500. For example, in embodiments wherein annotation frame 2600 is located above or below image 2500, image height 2306 can be a number of pixels constituting the height of image 2500 plus annotation height 2314, image width 2308 can be a number exceeding the number of pixels constituting the width of image 2500, and image size 2310 can be the size of image 2500 in kilobytes and the size of annotation frame 2600 in kilobytes.

Key 2324 can be a key that terminal 1000 uses to encrypt annotation 2400 and/or image 2500. In one exemplary embodiment of the invention, key 2324 can be a symmetric key that can be used to encrypt and decrypt annotation 2400 and/or image 2500. In another exemplary embodiment of the invention, key 2324 can be stored in annotation header 2300 in an encrypted format, e.g., DES or AES encrypted format. Encrypter identifier 2326 can be a unique identifier of a device, e.g., terminal 1000, encrypting annotation 2400 and/or image 2500. In one exemplary embodiment of the invention, encrypter identifier 2326 can be a serial number. In another exemplary embodiment of the invention, encrypter identifier 2326 can be a Media Access Control (MAC) address of a network adapter or network interface card of the device.

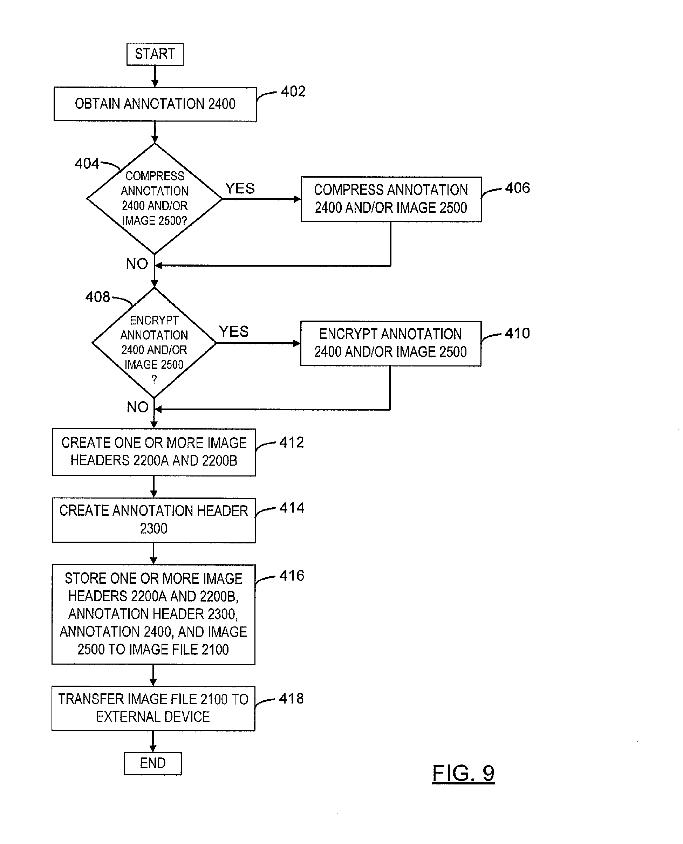

FIG. 9 is a flowchart of a method for associating annotation 2400 with image 2500 according to one exemplary embodiment of the invention. It will be understood that each block or combination of blocks shown in FIG. 9 can be implemented by computer program instructions, e.g., of annotation program function 1900, that can be stored on computer readable medium 1085 and executed by CPU 1060.

At block 402, annotation program function 1900 obtains annotation 2400 in response to terminal 1000 capturing image 2500. In one exemplary embodiment of the invention, at block 402, annotation program function 1900 obtains annotation 2400 in response to determining a source from which to obtain annotation 2400 from configuration program function 2000. The source can be, e.g., decodable indicia 120, computer readable medium 1085, battery 1116, GPS device 1118, or display 1222.

At block 404, annotation program function 1900 determines whether to compress annotation 2400 and/or image 2500. In one exemplary embodiment of the invention, at block 404, annotation program function 1900 determines whether to compress annotation 2400 and/or image 2500 from configuration program function 2000. At block 406, annotation program function 1900 compresses annotation 2400 and/or image 2500 using any suitable compression algorithm, e.g., a four-bit RLE algorithm or an eight-bit RLE algorithm.

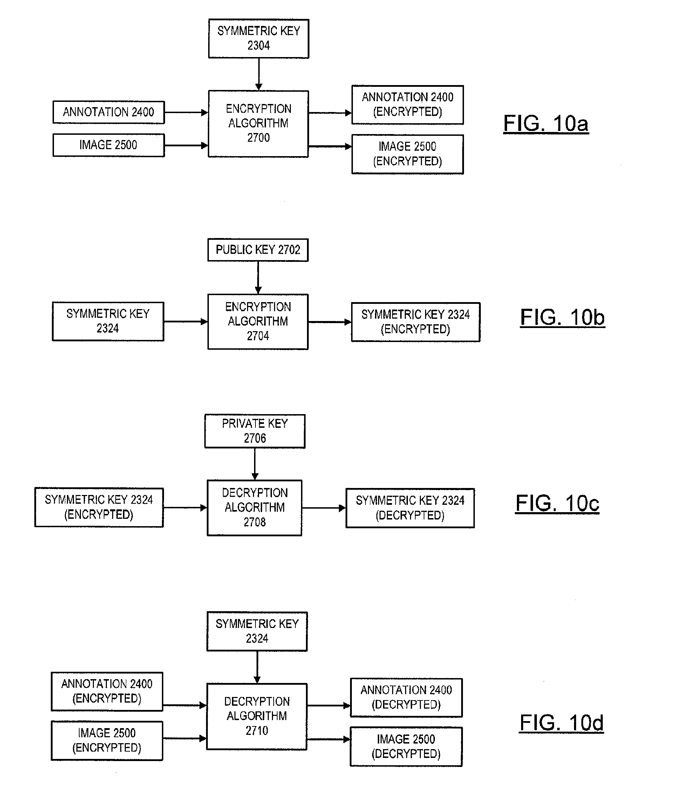

At block 408, annotation program function 1900 determines whether to encrypt annotation 2400 and/or image 2500. In one exemplary embodiment of the invention, at block 408, annotation program function 1900 determines whether to encrypt annotation 2400 and/or image 2500 from configuration program function 2000. If annotation 2400 and/or image 2500 are to be encrypted, at block 410, annotation program function 1900 encrypts annotation 2400 and/or image 2500 using any suitable encryption algorithm. Referring to FIG. 10a, in one exemplary embodiment of the invention, at block 410, annotation program function 1900 uses key 2324 and encryption algorithm 2700 to encrypt annotation 2400 and/or image 2500. Referring to FIG. 10b, in one exemplary embodiment of the invention, at block 410, annotation program function 1900 uses public key 2702 and encryption algorithm 2704 to encrypt key 2324.

Encryption algorithms 2700 and 2704 can be the same or different symmetric encryption algorithms and can be, e.g., DES or AES algorithms. Public key 2702 can be associated with a decrypting device, e.g., computer system 500 shown in FIG. 11. In one exemplary embodiment of the invention, the decrypting device can provide public key 2702 to terminal 1000 so that, at block 410, annotation program function 1900 encrypts key 2324 using public key 2702. In another exemplary embodiment of the invention, annotation program function 1900 can be restricted from encrypting key 2324 using public key 2702 provided by the decrypting device if the decrypting device is not authorized to decrypt annotation 2400 and/or image 2500.

Returning now to FIG. 9, at block 412, annotation program function 1900 creates one or more image headers 2200A and 2200B defined by a standard. The standard can be, e.g., BMP, Graphics Interchange Format (GIF), Joint Photographic Experts Group (JPG), Tagged Image File Format (TIFF), or any other suitable standard. At block 414, annotation program function 1900 creates annotation header 2300. At block 416, annotation program function 1900 stores one or more image headers 2200A and 2200B, annotation header 2300, annotation 2400, and image 2500 in data structure 2100 on computer readable medium 1085. At block 418, annotation program function 1900 transfers data structure 2100 to an external device, e.g., computer system 500, for rendering, e.g., on display device 518. In one exemplary embodiment of the invention, at block 418, annotation program function 1900 transfers data structure 2100 to the external device via RS-232. In another exemplary embodiment of the invention, at block 418, annotation program function 1900 transfers data structure 2100 to the external device via a network such as an Ethernet. In another exemplary embodiment of the invention, at block 418, annotation program function 1900 transfers data structure 2100 to the external device via a serial bus such as USB. In another exemplary embodiment of the invention, at block 418, annotation program function 1900 transfers data structure 2100 to the external device via a wireless communication link such as Bluetooth.

FIG. 11 is a block diagram of a computer system 500 for rendering the contents of data structure 2100 according to an exemplary embodiment of the invention. Computer system 500 can be a workstation, server, mainframe computer, notebook or laptop computer, desktop computer, mobile phone, wireless device, set-top box, or the like. Computer system 500 can have a processor provided by central processing unit (CPU) 502, which processor can be a programmable processor for executing program instructions stored on a computer readable medium 504. CPU 502 can be a reduced instruction set (RISC) microprocessor such as an IBM^{®} PowerPC^{®} processor, an x86 compatible processor such as an Intel^{®} Pentium^{®} processor, an Advanced Micro Devices^{®} Athlon^{®} processor, or any other suitable processor. IBM and PowerPC are trademarks or registered trademarks of International Business Machines Corporation in the United States, other countries, or both. Intel and Pentium are trademarks or registered trademarks of Intel Corporation or its subsidiaries in the United States, other countries, or both. Advanced Micro Devices and Athlon are trademarks or registered trademarks of Advanced Micro Devices, Inc. or its subsidiaries in the United States, other countries, or both. In other embodiments, CPU 502 may comprise one or more processors distributed across one or more locations, e.g., on a client and server.

CPU 502 can be connected to computer readable medium 504 through a dedicated system bus 506 and/or a general system bus 508. Computer readable medium 504 can be a computer readable signal medium or a computer readable storage medium. Computer readable medium 504 can be used for storage of software instructions and configuration settings. For example, operating system 510, standard image viewer 512, and custom image viewer 514 can be stored on computer readable medium 504.

Operating system 510 can provide functions such as device interface management, memory management, and multiple task management. Operating system 510 can be a Unix based operating system such as the IBM^{®} AIX^{®} operating system, a non-Unix based operating system such as an operating system falling within the Microsoft^{®} Windows^{®} family of operating systems, a network operating system such as Sun Microsystems^{®} JavaOS^{®}, or any other suitable operating system. IBM and AIX are trademarks or registered trademarks of International Business Machines Corporation in the United States, other countries, or both. Microsoft and Windows are trademarks or registered trademarks of Microsoft Corporation in the Untied States, other countries, or both. Sun Microsystems and Java and all Java-based trademarks and logos are trademarks of Sun Microsystems, Inc. in the United States, other countries, or both. CPU 502 can be suitably programmed to read, load, and execute instructions of operating system 510.

Standard image viewer 512 can be any commercially or otherwise publicly available software for rendering images in an open or standard format, e.g., BMP, JEPG, TIFF, or GIF. In one exemplary embodiment of the invention, wherein image header 2200A is a BMP header, standard image viewer 512 can locate first byte 2502 of image 2500 by utilizing image offset 2202 and can thereby render image 2500 on display device 518. Standard image viewer 512 will ignore annotation header 2300, and thereby will not render annotation 2400 along with image 2500. Accordingly, annotation 2400 will not obscure any portions of image 2500, advantageously allowing image 2500 to be viewed in its entirety.

The advantage of viewing an image in its entirety without annotations is more fully illustrated with reference to FIG. 1. As shown in FIG. 1, annotation 20A obscures a portion of image 10. However, the full view of image 10 as rendered by standard image viewer 512 may reveal, e.g., that annotation 20A obscured the numbers "25", allowing an inference to be made that the depicted package was incorrectly delivered to the address of 125 Any Street, as shown to the left of the door, instead of the address of 123 Any Street, as shown in the package address label.

Returning to FIG. 11, custom image viewer 514 can be computer program code comprising a computer program product for rendering annotation 2400 and image 2500 on display device 518 and can be embodied on computer readable medium 504. Custom image viewer 514 can be transmitted using any appropriate medium, including but not limited to wireless, wireline, optical fiber cable, RF, etc., or any suitable combination of the foregoing. Custom image viewer 514 can be written in any combination of one or more programming languages, including an object oriented programming language such as Java, Smalltalk, C++ or the like, conventional procedural programming languages, such as the "C" programming language, low-level programming languages, such as assembly language, or other high- or low-level programming languages.

General system bus 508 can support transfer of data, commands, and other information between various subsystems of computer system 500. While shown in simplified form as a single bus, general system bus 508 can be structured as multiple buses arranged in hierarchical form. Display interface 516 can support video display device 518, which can be a cathode-ray tube display or a display based upon other suitable display technology. The input/output interface 520 can support devices suited for input and output, such as keyboard or mouse device 522, and a disk drive unit (not shown).

Interface 524 can be used for operationally connecting many types of peripheral computing devices to computer system 500 via general system bus 508, such as printers, bus adapters, and other computers. Network interface 526 can provide a physical interface to network 528. Network interface 526 can be any type of adapter that provides an interface between computer system 500 and network 528, such as a modem that can be connected to a transmission system such as a telephone line, an Ethernet adapter, or a Token Ring adapter. Computer system 500 can be connected to another network server via a LAN using an appropriate network protocol and the network server that can in turn be connected to the Internet. Computer system 500 can also include radio transceiver 530 for providing communication with external devices (e.g., terminal 1000). In one exemplary embodiment of the invention, radio transceiver 530 can be a 2.4 GHz radio transceiver.

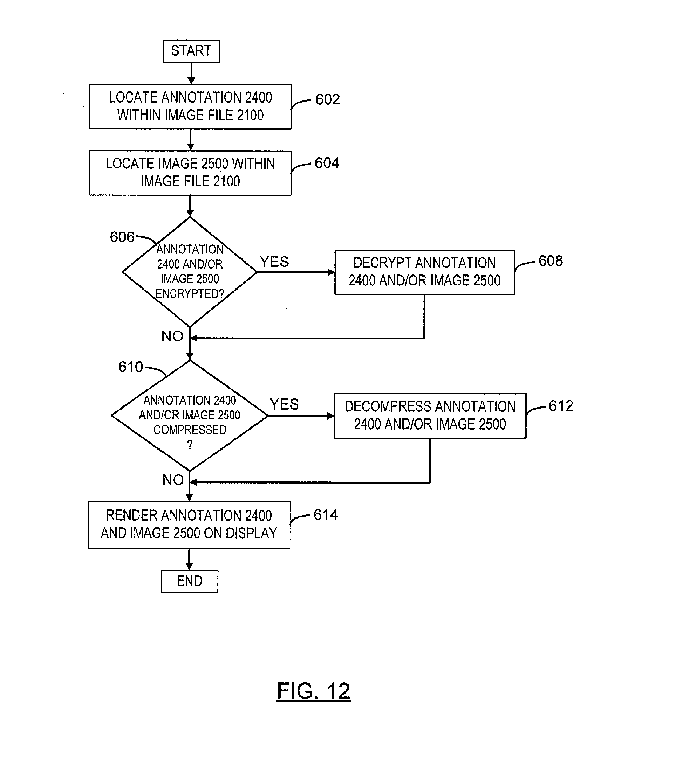

FIG. 12 is a flowchart of a method for rendering data structure 2100 comprising annotation 2400 and image 2500 on a display, e.g., display device 518, according to one exemplary embodiment of the invention. It will be understood that each block or combination of blocks shown in FIG. 12 can be implemented by computer program instructions, e.g., of custom image viewer 514, that can be stored on computer readable medium 504 and executed by CPU 502.

At block 602, custom image viewer locates annotation 2400 within data structure 2100. In one exemplary embodiment of the invention, at block 602, custom image viewer utilizes annotation offset 2302 to locate first byte 2402 of annotation 2400 within data structure 2100. At block 604, custom image viewer 514 locates image 2500 within data structure 2100. In one exemplary embodiment of the invention, at block 604, custom image viewer 514 utilizes image offset 2202 to locate first byte 2502 of image 2500 within data structure 2100.

At block 606, custom image viewer 514 determines whether annotation 2400 and/or image 2500 are encrypted. If annotation 2400 and/or image 2500 are encrypted, at block 608, custom image viewer 514 decrypts annotation 2400 and/or image 2500 using any suitable decryption algorithm. Referring to FIG. 10c, in one exemplary embodiment of the invention, at block 608, custom image viewer 514 can use a private key 2706 and a decryption algorithm 2708 to decrypt key 2324 that has been encrypted with public key 2702. Referring to FIG. 10d, in one exemplary embodiment of the invention, at block 608, custom image viewer 514 can use key 2324 and decryption algorithm 2710 to decrypt annotation 2400 and/or image 2500. Decryption algorithm 2708 and decryption algorithm 2710 can be the same or different decryption algorithms.

The ability to encrypt and decrypt annotation 2400 can be beneficial in that inferences about image 2500 based on annotation 2400 can be made, e.g., only by a supervisor having access to private key 2706 on the decrypting device, e.g., computer system 500. To illustrate, a courier capturing image 2500 may claim to his supervisor that a package shown in image 2500 was delivered on time, e.g., by March 30, 2010 at 2:00 p.m. However, the courier, utilizing custom image viewer 514 according to embodiments of the invention and not having access to private key 2706, will not be able to decrypt key 2324, and thereby will not be able to decrypt annotation 2400 which can show, e.g., the time of capture of image 2500. The supervisor, however, can access private key 2706 on the decryption device, e.g., computer system 500, whereby private key 2706 can be provided to decryption algorithm 2708 so that key 2324 can be decrypted, and key 2324 can then be provided to decryption algorithm 2710 so that annotation 2400 can be decrypted. The supervisor will thereby be able to view image 2500 with decrypted annotation 2400 showing that the package shown in image 2500 was actually delivered at 2:17 p.m., 17 minutes late, and allowing him to take appropriate action.

Returning to FIG. 12, at block 610, custom image viewer 514 determines whether annotation 2400 and/or image 2500 are compressed. In one exemplary embodiment of the invention, at block 610, custom image viewer 514 determines whether annotation 2400 and/or image 2500 are compressed from compression specification 2320. If annotation 2400 and/or image 2500 are compressed, at block 612, custom image viewer 514 decompresses annotation 2400 and/or image 2500.

At block 614, custom image viewer 514 renders annotation 2400 and image 2500 on a display, e.g., display device 518. In one exemplary embodiment of the invention, at block 614, custom image viewer 514 utilizes renders annotation 2400 at rendering location 2322 relative to image 2500. In another exemplary embodiment of the invention, at block 614, custom image viewer 514 renders annotation 2400 within image 2500. In another exemplary embodiment of the invention, at block 614, custom image viewer 514 renders annotation 2400 within annotation frame 2600. In another exemplary embodiment of the invention, at block 614, custom image viewer 514 renders annotation 2400 within annotation frame 2600 and sets the color of each pixel in annotation frame 2600, other than those comprising annotation 2400, to a predominant color in the adjacent area of image 2500. In another exemplary embodiment of the invention, at block 614, custom image viewer 514 determines whether annotation type 2312 is an audio recording. In another exemplary embodiment of the invention, at block 614, in response to determining that annotation type 2312 is an audio recording, custom image viewer renders an indicator such as a "play" button instead of rendering annotation 2400. In another exemplary embodiment of the invention, custom image viewer 514 can play the audio recording in response to a user selecting the "play" button, e.g., using mouse device 522.

Among the apparatus and methods set forth herein there is set forth herein:
A1. A terminal for use in associating an annotation with an image, the terminal comprising:
   a processor;
   one or more computer readable storage mediums;
   an imaging assembly;
   first program instructions to obtain an annotation from a source in response to the terminal capturing an image;
   second program instructions to create an image header defined by a standard; and
   third program instructions to store the image header, the image, and the annotation in a data structure on the one or more computer readable storage mediums;
   wherein the first, second, and third program instructions are stored on the one or more computer readable storage mediums for execution by the processor.
A2. The terminal of A1, further comprising fourth program instructions to create an annotation header, wherein the third program instructions include program instructions to store the annotation header on the one or more computer readable storage mediums, and wherein the fourth program instructions are stored on the one or more computer readable storage mediums for execution by the processor.
A3. The terminal of A1, further comprising fourth program instructions to compress one or more of the image and the annotation, wherein the fourth program instructions are stored on the one or more computer readable storage mediums for execution by the processor.
A4. The terminal of A1, further comprising fourth program instructions to encrypt one or more of the image and the annotation, wherein the fourth program instructions are stored on the one or more computer readable storage mediums for execution by the processor.
A5. The terminal of A1, further comprising fourth program instructions to transfer the data structure to a device external to the terminal, wherein the fourth program instructions are stored on the one or more computer readable storage mediums for execution by the processor.
A6. The terminal of A1, further comprising a GPS device, wherein the source is the GPS device.
A7. The terminal of A1, further comprising a battery, and wherein the source is the battery.
A8. The terminal of A1, wherein the source is the one or more computer readable storage mediums.
A9. The terminal of A1, further comprising a display, wherein the source is the display.
A10. The terminal of A1, further comprising an encoded information reader unit, wherein the source is decodable indicia decoded by the terminal.
A11. The terminal of A1, wherein the annotation is selected from the group consisting of a date, a time, GPS coordinates, user-marking coordinates, a decoded-out message generated from decodable indicia, RFID tag data, card data, a serial number of the terminal, and an audio recording.
A12. The terminal of A1, wherein the annotation comprises a string describing the annotation.
A13. The terminal of A2, wherein the annotation header comprises a key for use in encrypting and decrypting one or more of the annotation and the image.
A14. The terminal of A2, wherein the annotation header comprises a compression specification for use in identifying a compression algorithm for compressing one or more of the annotation and the image.
A15. The terminal of A2, wherein the annotation header comprises an encrypter identifier for identifying a device encrypting one or more of the annotation and the image.
B 1. A computer program product for rendering a data structure comprising an annotation and an image on a display, the computer program product comprising:
   a computer readable storage medium;
   first program instructions to locate the annotation within the data structure;
   second program instructions to locate the image within the data structure; and
   third program instructions to render the annotation at a rendering location relative to the image on the display;
   wherein the first, second, and third program instructions are stored on the computer readable storage medium.
B2. The computer program product of B1, wherein the data structure further comprises an annotation header, and wherein the first program instructions include program instructions to utilize an annotation offset of the annotation header to locate a first byte of the annotation within the data structure.
B3. The computer program product of B1, wherein the data structure further comprises an image header, and wherein the first program instructions include program instructions to utilize an image offset of the image header to locate a first byte of the image within the data structure.
B4. The computer program product of B1, further comprising fourth program instructions to decrypt one or more of the image and the annotation, wherein the fourth program instructions are stored on the computer readable medium.
B5. The computer program product of B1, further comprising fourth program instructions to decompress one or more of the image and the annotation, wherein the fourth program instructions are stored on the computer readable medium.
B6. The computer program product of B1, wherein the rendering location is within the image.
B7. The computer program product of B1, wherein the rendering location is an annotation frame adjacent to the image.
B8. The computer program product of B1, wherein the annotation is an audio recording, and wherein the third program instructions further comprise program instructions to render an indicator of the audio recording instead of rendering the audio recording.
C1. A computer system for rendering a data structure comprising an annotation and an image on a display, the computer system comprising:
   the display;
   one or more computer readable storage mediums;
   first program instructions to locate the annotation within the data structure;
   second program instructions to locate the image within the data structure; and
   third program instructions to render the annotation at a rendering location relative to the image on the display;
   wherein the first, second, and third program instructions are stored on the one or more computer readable storage mediums.
C2. The computer system of C1, further comprising an standard image viewer for rendering the image on the display, wherein the standard image viewer is restricted from being operative from rendering the annotation on the display, and wherein the standard image viewer is stored on the one or more computer readable storage mediums.

While the present invention has been particularly shown and described with reference to certain exemplary embodiments, it will be understood by one skilled in the art that various changes in detail may be effected therein without departing from the spirit and scope of the invention as defined by claims that can be supported by the written description and drawings. Further, where exemplary embodiments are described with reference to a certain number of elements it will be understood that the exemplary embodiments can be practiced utilizing either less than or more than the certain number of elements.

## Claims

1. A terminal for use in associating an annotation with an image, the terminal comprising:
a processor;
one or more computer readable storage mediums;
an imaging assembly;
first program instructions to obtain an annotation from a source in response to the terminal capturing an image;
second program instructions to create an image header defined by a standard; and
third program instructions to store the image header, the image, and the annotation in a data structure on the one or more computer readable storage mediums;
wherein the first, second, and third program instructions are stored on the one or more computer readable storage mediums for execution by the processor.

2. The terminal of claim 1, further comprising fourth program instructions to create an annotation header, wherein the third program instructions include program instructions to store the annotation header on the one or more computer readable storage mediums, and wherein the fourth program instructions are stored on the one or more computer readable storage mediums for execution by the processor.

3. The terminal of claim 1, further comprising fourth program instructions to compress one or more of the image and the annotation, wherein the fourth program instructions are stored on the one or more computer readable storage mediums for execution by the processor.

4. The terminal of claim 1, further comprising fourth program instructions to encrypt one or more of the image and the annotation, wherein the fourth program instructions are stored on the one or more computer readable storage mediums for execution by the processor.

5. The terminal of claim 1, further comprising fourth program instructions to transfer the data structure to a device external to the terminal, wherein the fourth program instructions are stored on the one or more computer readable storage mediums for execution by the processor.

6. The terminal of claim 1, further comprising a GPS device, wherein the source is the GPS device.

7. The terminal of claim 1, further comprising a battery, and wherein the source is the battery.

8. The terminal of claim 1, further comprising a display, wherein the source is the display.

9. The terminal of claim 1, wherein the annotation is selected from the group consisting of a date, a time, GPS coordinates, user-marking coordinates, a decoded-out message generated from decodable indicia, RFID tag data, card data, a serial number of the terminal, and an audio recording.

10. A computer program product for rendering a data structure comprising an annotation and an image on a display, the computer program product comprising:
a computer readable storage medium;
first program instructions to locate the annotation within the data structure;
second program instructions to locate the image within the data structure; and
third program instructions to render the annotation at a rendering location relative to the image on the display;
wherein the first, second, and third program instructions are stored on the computer readable storage medium.

11. The computer program product of claim 10, wherein the data structure further comprises an annotation header, and wherein the first program instructions include program instructions to utilize an annotation offset of the annotation header to locate a first byte of the annotation within the data structure.

12. The computer program product of claim 10, wherein the data structure further comprises an image header, and wherein the first program instructions include program instructions to utilize an image offset of the image header to locate a first byte of the image within the data structure.

13. The computer program product of claim 10, wherein the rendering location is an annotation frame adjacent to the image.

14. A computer system for rendering a data structure comprising an annotation and an image on a display, the computer system comprising:
the display;
one or more computer readable storage mediums;
first program instructions to locate the annotation within the data structure;
second program instructions to locate the image within the data structure; and
third program instructions to render the annotation at a rendering location relative to the image on the display;
wherein the first, second, and third program instructions are stored on the one or more computer readable storage mediums.

15. The computer system of claim 14, further comprising an standard image viewer for rendering the image on the display, wherein the standard image viewer is restricted from being operative from rendering the annotation on the display, and wherein the standard image viewer is stored on the one or more computer readable storage mediums.
